# EUROPÄISCHE PATENTSCHRIFT

(11) **EP 2 577 177 B1**
(45) Veröffentlichungstag und Bekanntmachung des Hinweises auf die Patenterteilung: **10.02.2016**
(21) Anmeldenummer: 11776328.4
(22) Anmeldetag: 04.06.2011
(51) Int. Cl.: F24F 3/06, F24F 11/00, F24D 19/10

(54) **VERFAHREN ZUM AUTOMATISCHEN HYDRAULISCHEN ABGLEICH IN FLUIDFÜHRENDEN ANLAGEN**
METHOD FOR AUTOMATIC HYDRAULIC COMPENSATION IN FLUID-CONDUCTING SYSTEMS
PROCÉDÉ D'AJUSTEMENT HYDRAULIQUE AUTOMATIQUE DANS DES INSTALLATIONS À CIRCULATION DE FLUIDE

(30) Priorität: 05.06.2010 DE 102010022763
(43) Veröffentlichungstag der Anmeldung: 10.04.2013
(73) Patentinhaber: Oventrop GmbH & Co. KG, 59939 Olsberg (DE)
(72) Erfinder: LÖFFLER, Gerhard, 59939 Olsberg (DE)
(74) Vertreter: Köchling, Conrad-Joachim
(86) Internationale Anmeldenummer: PCT/DE2011/001319
(87) Internationale Veröffentlichungsnummer: WO 2012/010127

(56) Entgegenhaltungen:
- EP-A1- 0 795 724
- EP-A2- 2 085 707
- DE-A1- 19 912 588
- FR-A1- 2 903 763
- FR-A1- 2 931 226
- US-A1- 2010 147 394

## Beschreibung

Die Erfindung betrifft ein Verfahren zum automatischen hydraulischen Abgleich von Heizungs- und/oder Kühlanlagen, die von einem Wärmeträgermedium durchströmt sind, mit mindestens einem Wärme- und/oder Kälteerzeuger, mehreren über ein den Wärmeträger führendes Rohrleitungssystem strangweise verbundenen Verbrauchern sowie mit mindestens einer Umwälzpumpe, wobei in den Rohrleitungssträngen zur Regelung der Strangdifferenzdrücke mit Stellantrieben versehene Regelarmaturen installiert sind.

Das Wärmeträgermedium ist ein Fluid, vorzugsweise Wasser. Das Verfahren kann bei Heizungs- und Kühlanlagen mit mindestens einem Wärme- und/oder Kälteerzeuger, mehreren Verbrauchern, Rohrleitungen zur flüssigkeitsführenden Verbindung von Wärme und/oder Kälteerzeuger und Verbraucher sowie mit mindestens einer Umwälzpumpe und in die Rohrleitungen eingebauten Regelventilen angewandt werden.

Durch die ständig höher werdenden Anforderungen an die Energieeinsparung von fluidführenden Anlagen in Gebäuden, wie beispielsweise Heizungs-, Kühl- und/oder Sanitäranlagen werden auch exaktere, beziehungsweise dem momentanen Energieverbrauch angepasste hydraulische Verhältnisse gefordert. Die bisher übliche einfache statische Einregulierung der Volumenströme, zum Beispiel durch Strangregulierventile, in Anlagen, bei denen sehr häufig wechselnde Lastzustände auftreten, reichen nicht mehr aus. Hinzu kommt, dass vor allem in älteren Anlagen, in denen oft die tatsächliche Rohrführung nicht bekannt ist, selbst eine optimale statische Einregulierung nicht möglich ist.

Aus der DE 199 12 588 A1 ist ein Verfahren gattungsgemäßer Art bekannt, bei dem Strangströmungsgrößen in den Rohrleitungssträngen gemessen werden und aufgrund der erfassten Werte Regelungen durchgeführt werden, wobei als Strangströmungsgröße Volumenstromwerte erfasst werden.

Dokument DE 199 12 588 A1 offenbart ein Verfahren zum automatischen hydraulischen Abgleich von Heizungs- und/oder Kühlanlagen, die von einem Wärmeträgermedium durchströmt sind, mit mindestens einem Wärme- und/oder Kälteerzeuger, mehreren über ein den Wärmeträger führendes Rohrleitungssystem strangweise verbundenen Verbrauchern sowie mit mindestens einer Umwälzpumpe, wobei in den Rohrleitungssträngen zur Regelung der Strangströmungsgrößen mit Stellantrieben versehene Regelarmaturen installiert sind, wobei in einem ersten Verfahrensschritt von jeweils einem Strömungsgrößenaufnehmer pro Rohrleitungsstrang die Strömungsgröße von Eingangs- und Ausgangsseite der Regelarmaturen und anschließend die Strangströmungsgrößen zwischen Vor-und Rücklaufleitungen erfasst und die erfassten Messdaten in eine Recheneinheit eingelesen und in dieser abgespeichert werden, dass in einem zweiten Verfahrensschritt kontinuierlich die Strangströmungsgrößen in allen Rohrleitungssträngen gemessen werden, die Messdaten an die Recheneinheit übertragen werden und mit abgespeicherten Daten verglichen werden, wobei aus den ermittelten Vergleichsdaten von der Recheneinheit Stellbefehle generiert werden, mittels derer durch die Stellantriebe der Regelarmaturen die aktuellen Strangströmungsgrößen auf eine abgespeicherte Strömungsgröße geregelt wird.

Die FR 2 931 226 A1 beschreibt ein System zur Steuerung und zum Abgleich der Installation von zirkulierenden Fluiden beispielsweise in Heizungsanlagen oder Klimaanlagen.

Der Erfindung liegt demzufolge die Aufgabe zugrunde, auch bei wechselnden Lastzuständen aller Stränge, zum Beispiel einer Heizungsanlage eine auf den Auslegungszustand angepasste optimale Versorgung zu erhalten, die durch die für den Auslegungszustand ermittelten Volumenstromverhältnisse bestimmt ist.

Insbesondere ist Aufgabe der Erfindung, auch bei variablen, ständig wechselnden Volumenstromanforderungen der Verbraucher durch einen automatischen hydraulischen Abgleich eine Unter- beziehungsweise Überversorgung der einzelnen Rohrleitungsstränge zu vermeiden und den durch die Umwälzpumpe zur Versorgung der Verbraucher erzeugten Gesamtdifferenzdruck möglichst niedrig zu halten, um hierdurch den Energieverbrauch der Gesamtanlage zu verringern.

Zur Lösung dieser Aufgabe schlägt die Erfindung vor, dass in einem ersten Verfahrensschritt von jeweils einem Differenzdruckaufnehmer pro Rohrleitungsstrang die Differenzdrücke von Eingangs- und Ausgangsseite der Regelarmaturen und anschließend die Strangdifferenzdrücke zwischen Vor- und Rücklaufleitungen erfasst und die erfassten Messdaten in eine Recheneinheit eingelesen und in dieser abgespeichert werden, dass in einem zweiten Verfahrensschritt kontinuierlich die Strangdifferenzdrücke in allen Rohrleitungssträngen gemessen werden, die Messdaten an die Recheneinheit übertragen werden und mit den im ersten Verfahrensschritt abgespeicherten Messdaten verglichen werden, wobei aus den ermittelten Vergleichsdaten von der Recheneinheit Stellbefehle generiert werden, mittels derer durch die Stellantriebe der Regelarmaturen die aktuellen Strangdifferenzdrücke auf die im ersten Verfahrensschritt abgespeicherten Differenzdrücke geregelt werden. Zudem ist vorgesehen, dass zu Beginn des zweiten Verfahrensschrittes zunächst die Regelarmatur im hydraulisch ungünstigsten Rohrleitungsstrang vollständig geöffnet wird und dann mittels der weiteren Regelarmaturen der weiteren Rohrleitungsstränge über die Recheneinheit der Differenzdruck in den weiteren Rohrleitungssträngen auf den im ersten Verfahrensschritt abgespeicherten Differenzdruck geregelt wird.

Vorzugsweise ist vorgesehen, dass mittels der Recheneinheit, vorzugsweise parallel zum zweiten Verfahrensschritt, die Pumpenleistung der Umwälzpumpe derart geregelt wird, dass der hydraulisch ungünstigste Rohrleitungsstrang noch mit ausreichendem Differenzdruck versorgt wird.

In an sich bekannter Weise ist vorzugsweise vorgesehen, dass die Regelarmaturen der einzelnen Verbraucher hinsichtlich ihres Durchflusses voreingestellt werden. Das erfindungsgemäße Verfahren umfasst vorzugsweise die Ermittlung des Wärme/Kühlbedarfs, die Berechnung des Heizkörpers/Kühlvolumenstroms mittels Wärme/Kühlbedarf und Temperaturspreizung, die Voreinstellung der Ventile am Verbraucher, die automatische Volumenstromermittlung im jeweiligen Strang und die Regelung des Differenzdruckes zwischen Vor- und Rücklaufleitung. An den Verbrauchern sind üblicherweise Ventile angebracht, die voreinstellbar sind. Zur Raumheizung sind beispielsweise Ventile mit Thermostatköpfen üblich. Die Thermostatköpfe werden dann aber erst nach der Einregulierung montiert oder aber die Einregulierung erfolgt bei Offenstellung des Ventiles.

Die Volumenstromermittlung im jeweiligen Strang erfolgt beispielsweise in der Weise, dass die Strangregulierventile (Regelarmaturen) mit Messschläuchen an die Differenzdruckaufnehmer angeschlossen werden.

Zudem ist vorteilhaft, wenn die Strangdifferenzdrücke im Absenkbetrieb heruntergeregelt werden.

Auch ist bevorzugt, dass die Recheneinheit mit dem Internet verbunden wird und mit daran angeschlossenen Rechnern kommuniziert.

Gemäß der Erfindung wird der in den einzelnen Rohrleitungssträngen und in der Gesamtanlage erforderliche Differenzdruck in der realen Anlage ermittelt, das bedeutet, es werden sämtliche Widerstände der Anlage berücksichtigt. Ungenauigkeiten, die durch eine rein rechnerische Ermittlung der Anlagenwerte entstehen könnten, sind somit vermieden.

Im Ergebnis wird ein permanenter, dynamischer hydraulischer Abgleich in der Anlage sichergestellt. Damit wird schnell auf eine Veränderung der Energieabnahme an den Verbrauchern reagiert und ein für alle Betriebszustände optimaler hydraulischer Abgleich und damit ein niedriger Energieverbrauch der Anlage sichergestellt. Zudem können durch den geregelten Differenzdruck in den Strängen Strömungsgeräusche an den Verbrauchern vermieden oder gemindert werden.

Weil während des Betriebes das in dem hydraulisch jeweils ungünstigsten Strang installierte Regelventil ganz geöffnet ist und die weiteren Regelventile nur auf das unbedingt erforderliche Maß geschlossen werden, entstehen durch den hydraulischen Abgleich nur geringe Druckverluste. Die Umwälzpumpe kann demzufolge auf eine niedrige Drehzahl geregelt werden und damit kann der Energieverbrauch der Anlage noch weiter verringert werden.

Bei Nachtabsenkung kann der Differenzdruck in den Strängen heruntergeregelt werden, wodurch kleine Wassermengen umgewälzt werden und sich wiederum der Energieverbrauch verringert.

In der Zeichnung ist in Figur 1 ein Ablaufplan für ein Verfahren des automatischen hydraulischen Abgleichs gezeigt. In Figur 2 ist eine Systemdarstellung zur Ermittlung von Anlagekenngrößen gezeigt, während in Figur 3 eine Systemdarstellung zur Durchführung des automatischen hydraulischen Abgleichs gezeigt ist.

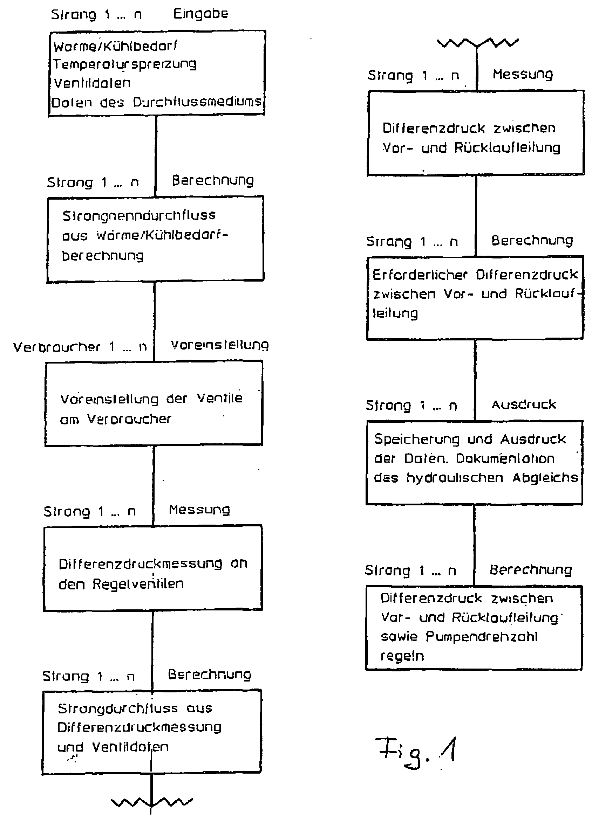

Wie in Figur 1 gezeigt, wird bei dem nicht erfindungsgemäßen Verfahren zunächst so vorgegangen, dass die Anlagekenngrößen eingegeben und in einer Recheneinheit eingelesen sowie in dieser abgespeichert werden.

Beispielsweise wird für jeden Strang 1 bis n eine Eingabe von Wärme/Kühlbedarf, Temperaturspreizung, Ventildaten und Daten des Durchflussmediums durchgeführt. Nachfolgend wird für jeden Strang 1 bis n eine Berechnung des Strangnenndurchflusses aus Wärme/Kühlbedarfsberechnung vorgenommen. Des Weiteren wird für jeden Verbraucher 1 bis n eine Voreinstellung vorgenommen, also die Voreinstellung der Ventile am jeweiligen Verbraucher. Des Weiteren wird für jeden Strang 1 bis n eine Differenzdruckmessung an den Regelventilen durchgeführt. Anschließend erfolgt eine Berechnung des Strangdurchflusses aus der Differenzdruckmessung und den Ventildaten. Diese Daten werden in die Recheneinheit eingelesen und abgespeichert. Bei dem eigentlichen permanenten dynamischen hydraulischen Abgleich der Anlage wird gemäß Darstellung in Figur 1 für jeden Strang 1 bis n eine Messung des Differenzdruckes zwischen Vor- und Rücklaufleitung durchgeführt. Die Daten werden in die Recheneinheit eingelesen und die Recheneinheit gibt permanent Stellbefehle an die Stellantriebe der Regelarmaturen. Gegebenenfalls können diese Daten gespeichert werden und ein Ausdruck der Daten zur Dokumentation des tatsächlichen hydraulischen Abgleichs gefertigt werden. Zudem kann mittels der Recheneinheit der Differenzdruck zwischen Vor- und Rücklaufleitung als Regelgröße für die Pumpenleistung der Umwälzpumpe herangezogen werden, so dass die Umwälzpumpe hierdurch ebenfalls angepasst und geregelt werden kann.

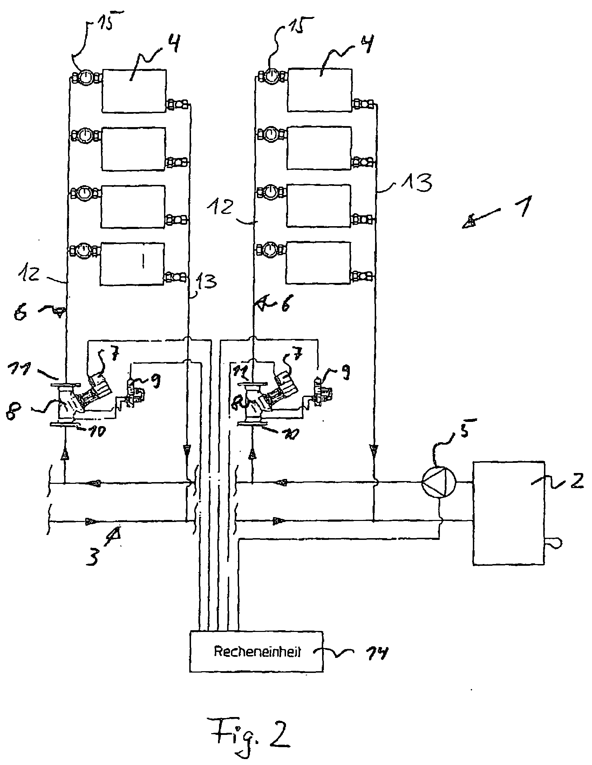

In Figur 2 ist ein grundsätzliches Anlageschema gezeigt. Bei 1 ist eine entsprechende Heizungs- oder Kühlanlage angegeben, die von einem Wärmeträgermedium, beispielsweise Wasser durchströmt ist. Die Anlage umfasst unter anderem einen Wärme- oder Kälteerzeuger 2 sowie mehrere über ein flüssigkeitsführendes Rohrleitungssystem 3 hiermit strangweise verbundenen Verbrauchern 4, eine Umwälzpumpe 5 sowie in den entsprechenden Rohrleitungssträngen 6 zur Regelung der Strangdifferenzdrücke bestimmte Regelarmaturen 8 mit Stellantrieben 7. Jede Regelarmatur 8 hat einen Eingang 10 und einen Ausgang 11. Jeder Strang 6 weist eine Vorlaufleitung 12 und eine Rücklaufleitung 13 auf. Zusätzlich ist eine Recheneinheit 14 vorgesehen, die mit den Differenzdruckaufnehmern 9, die jeder Regelarmatur 8 zugeordnet sind, kommuniziert und die ebenfalls mit den Stellantrieben 7 der Regelventile kommuniziert sowie mit der Umwälzpumpe 5.

Zur Durchführung des erfindungsgemäßen Verfahrens wird zunächst von dem Differenzdruckaufnehmer 9 jeweils der Differenzdruck von Eingangsseite 10 zur Ausgangsseite 11 der Regelarmatur 8 aufgenommen und anschließend die Strangdifferenzdrücke zwischen Vorlaufleitung 12 und Rücklaufleitung 13. Diese Daten werden auf die Recheneinheit 14 übertragen, das heißt, in diese eingelesen und abgespeichert.

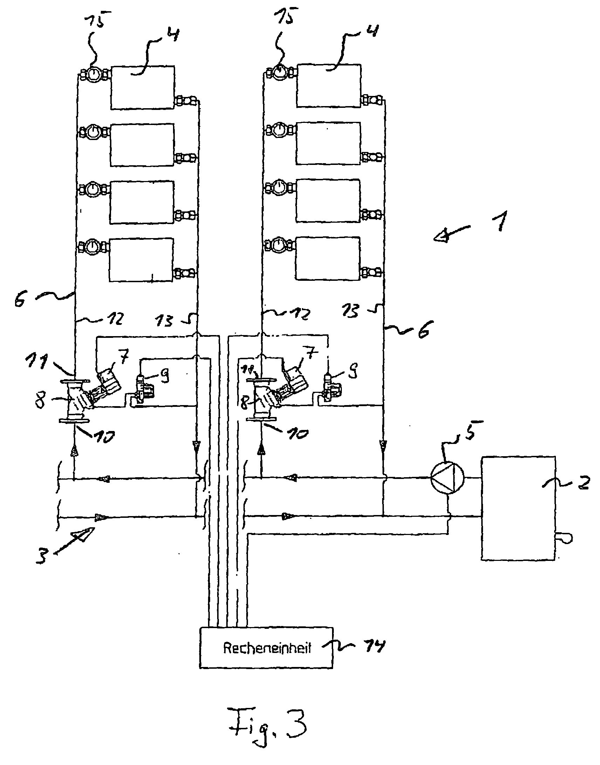

Die Recheneinheit 14 wiederum, gibt, wie insbesondere in Figur 3 verdeutlicht ist, Stellbefehle an die Stellantriebe 7 der Regelventile 8 ab, wobei das Regelventil 8 mindestens eines Stranges 6 in Offenstellung gefahren wird (im ungünstigsten Strang) und die Strangdifferenzdrücke in allen Strängen 6 mittels Stellbewegung der weiteren Regelarmaturen der weiteren Stränge 6 auf die erforderliche Höhe geregelt wird.

Parallel dazu wird vorzugsweise von der Recheneinheit 14 die Pumpendrehzahl und damit die Pumpenleistung geregelt, so dass jeweils der ungünstigste Strang 6 gerade noch mit ausreichendem Differenzdruck versorgt wird.

Vorzugsweise werden die Strangdifferenzdrücke im Absenkbetrieb heruntergeregelt. Hierzu kann die Recheneinheit entsprechend programmiert werden.

Die Recheneinheit 14 kann auch mit dem Internet verbunden sein und mit daran angeschlossenen Rechnern kommunizieren.

Mit dem erfindungsgemäßen Verfahren ist es möglich, bei einer bestehenden Anlage den Differenzdruck real zu ermitteln, wobei sämtliche Widerstände der Anlage berücksichtigt werden und Ungenauigkeiten, die durch eine rein rechnerische Ermittlung entstehen könnten, vermieden werden. Im Ergebnis wird ein permanenter dynamischer hydraulischer Abgleich erreicht.

## Patentansprüche

1. Verfahren zum automatischen hydraulischen Abgleich von Heizungs- und/oder Kühlanlagen (1), die von einem Wärmeträgermedium durchströmt sind, mit mindestens einem Wärme- und/oder Kälteerzeuger (2), mehreren über ein den Wärmeträger führendes Rohrleitungssystem (3) strangweise verbundenen Verbrauchern (4) sowie mit mindestens einer Umwälzpumpe (5), wobei in den Rohrleitungssträngen (6) zur Regelung der Strangdifferenzdrücke mit Stellantrieben (7) versehene Regelarmaturen (8) installiert sind, wobei in einem ersten Verfahrensschritt von jeweils einem Differenzdruckaufnehmer (9) pro Rohrleitungsstrang (6) die Differenzdrücke von Eingangs- (10) und Ausgangsseite (11) der Regelarmaturen (8) und anschließend die Strangdifferenzdrücke zwischen Vor-(12) und Rücklaufleitungen (13) erfasst und die erfassten Messdaten in eine Recheneinheit (14) eingelesen und in dieser abgespeichert werden, dass in einem zweiten Verfahrensschritt kontinuierlich die Strangdifferenzdrücke in allen Rohrleitungssträngen (6) gemessen werden, die Messdaten an die Recheneinheit (14) übertragen werden und mit den im ersten Verfahrensschritt abgespeicherten Messdaten verglichen werden, wobei aus den ermittelten Vergleichsdaten von der Recheneinheit (14) Stellbefehle generiert werden, mittels derer durch die Stellantriebe (7) der Regelarmaturen (8) die aktuellen Strangdifferenzdrücke auf die im ersten Verfahrensschritt abgespeicherten Differenzdrücke geregelt werden, und dass zu Beginn des zweiten Verfahrensschrittes zunächst die Regelarmatur (8) im hydraulisch ungünstigsten Rohrleitungsstrang (6) vollständig geöffnet wird und dann mittels der weiteren Regelarmaturen (8) der weiteren Rohrleitungsstränge (6) über die Recheneinheit (14) der Differenzdruck in den weiteren Rohrleitungssträngen (6) auf den im ersten Verfahrensschritt abgespeicherten Differenzdruck geregelt wird.

2. Verfahren nach Anspruch 1, **dadurch gekennzeichnet, dass** mittels der Recheneinheit, (14) vorzugsweise parallel zum zweiten Verfahrensschritt, die Pumpenleistung der Umwälzpumpe (5) derart geregelt wird, dass der hydraulisch ungünstigste Rohrleitungsstrang (6) noch mit ausreichendem Differenzdruck versorgt wird.

3. Verfahren nach einem der Ansprüche 1 oder 2, **dadurch gekennzeichnet, dass** die Regelarmaturen (15) der einzelnen Verbraucher (4) hinsichtlich ihres Durchflusses voreingestellt werden.

4. Verfahren nach einem der Ansprüche 1 bis 3, **dadurch gekennzeichnet, dass** die Strangdifferenzdrücke im Absenkbetrieb heruntergeregelt werden.

5. Verfahren nach einem der Ansprüche 1 bis 4, **dadurch gekennzeichnet, dass** die Recheneinheit (14) mit dem Internet verbunden wird und mit daran angeschlossenen Rechnern kommuniziert.

## Claims

1. A method for automatic hydraulic compensation in heating and/or cooling systems (1), which are flowed through by a heat carrier medium, comprising at least one heat generator and/or chiller (2), several consumers (4) string-wise connected by a piping system (3) conducting the heat carrier and comprising at least one circulation pump (5), control valves (8) provided with actuators (7) being installed in the pipe strings (6) for regulating the string differential pressures, wherein in a first method step, by one differential pressure transducer (9) each per pipe string (6), the differential pressures of the input (10) and output side (11) of the control valves (8) and thereafter the string differential pressures between feed (12) and outlet lines (13) are detected, and the detected measurement data are inputted into a computing unit (14) and stored therein, that in a second method step the string differential pressures in all pipe strings (6) are continuously measured, the measurement data are transmitted to the computing unit (14) and compared to the measurement data stored in the first step, from the determined comparison data the computing unit (14) generating actuating commands, by means of which by the actuators (7) of the control valves (8), the actual string differential pressures are regulated to the target differential pressures stored in the first method step, and that at the beginning of the second method step first the control valve (8) in the hydraulically most unfavorable pipe string (6) is completely opened, and then by means of the further control valves (8) of the further pipe strings (6), by the computing unit (14), the differential pressure in the further pipe strings (6) is regulated to the differential pressure stored in the first method step.

2. The method according to claim 1, **characterized by** that by means of the computing unit (14), preferably in parallel to the second method step, the pump capacity of the circulation pump (5) is regulated such that the hydraulically most unfavorable pipe string (6) is still supplied with sufficient differential pressure.

3. The method according to one of claims 1 or 2, **characterized by** that the control valves (15) of the individual consumers (4) are pre-set with respect to the flow therethrough.

4. The method according to one of claims 1 to 3, **characterized by** that the string differential pressures are regulated down in the set-back mode.

5. The method according to one of claims 1 to 4, **characterized by** that the computing unit (14) is connected to the internet and communicates with the computers connected thereto.

## Revendications

1. Procédé d'ajustement hydraulique automatique dans des installations de chauffage et/ou de refroidissement (1), qui sont parcourues par un fluide caloporteur, comprenant au moins un générateur thermique (2), plusieurs consommateurs (4) étant reliés aux bras d'une tuyauterie (3) amenant le caloporteur et comprenant au moins une pompe de circulation (5), des vannes de régulation (8) pourvues d'actionneurs (7) étant installées dans les bras de la tuyauterie (6) pour réguler les pressions différentielles des bras, dans lequel, dans une première étape du procédé, par un capteur (9) de la pression différentielle chacun par bras (3) de la tuyauterie, les pressions différentielles du côté d'entrée (10) et de sortie (11) des vannes de régulation (8) et après les pressions différentielles des bras entre les tuyaux avant (12) et retour (13) sont détectées et les données mesurées détectées sont introduites dans un ensemble calculateur (14) et sont mémorisées là-dedans, que dans une deuxième second étape du procédé, les pressions différentielles de tous les bras de la tuyauterie (6) sont mesurées en continu, les données mesurées sont transmises à l'ensemble calculateur (14) et comparées à des données mesurées mémorisées dans la première étape, à partir des données de comparaison déterminées l'ensemble calculateur (14) générant des commandes d'actionnement, au moyen desquelles par les actionneurs (7) des vannes de régulation (8), les pressions différentielles actuelles des bras sont régulées aux pressions différentielles de consigne mémorisées dans la première étape, et qu'au commencement de la deuxième étape du procédé d'abord la vanne de régulation (8) dans le bras de la tuyauterie (6) hydrauliquement le plus défavorable est complètement ouverte, et puis au moyen des autres vannes de régulation (8) des autres bras de la tuyauterie (6), par l'ensemble calculateur (14), la pression différentielle dans les autres bras de la tuyauterie (6) est régulée à la pression différentielle mémorisée dans la première étape du procédé.

2. Procédé selon revendication 1, **caractérisé en ce qu'**au moyen de l'ensemble calculateur (14), de préférence en parallèle à la deuxième étape du procédé, la capacité de pompage de la pompe de circulation (5) est régulée de telle façon que le bras de la tuyauterie (6) le plus défavorable soit encore alimenté avec une pression différentielle suffisante.

3. Procédé selon une des revendications 1 ou 2, **caractérisé en ce que** les vannes de régulation (15) des consommateurs (4) individuels sont préréglées en ce qui concerne l'écoulement à travers celles-ci.

4. Procédé selon une des revendications 1 à 3, **caractérisé en ce que** les pressions différentielles des bras sont régulées à une valeur plus basse dans le fonctionnement de dépression.

5. Procédé selon une des revendications 1 à 4, **caractérisé en ce que** l'ensemble calculateur (14) est raccordé à l'internet et est en communication avec des ordinateurs raccordés à celui-ci.
